# EUROPEAN PATENT APPLICATION

(11) **EP 2 458 481 A1**
(43) Date of publication of application: **30.05.2012**
(21) Application number: 10802033.0
(22) Date of filing: 03.03.2010
(51) Int. Cl.: G06F 3/041

(54) **INPUT CONTROL APPARATUS**

(30) Priority: 21.07.2009 JP 2009169885
(71) Applicant: Panasonic Corporation, Kadoma-shi Osaka 571-8501 (JP)
(72) Inventor: KONISHI, Yousuke, Osaka-shi, Osaka 540-6207 (JP); KOGA, Naoki, Osaka-shi, Osaka 540-6207 (JP); ISHIHARA, Tomohiro, Osaka-shi, Osaka 540-6207 (JP)
(74) Representative: Grünecker, Kinkeldey, Stockmair & Schwanhäusser
(86) International application number: PCT/JP2010/001479
(87) International publication number: WO 2011/010411

(57) **Abstract**

In a portable terminal that is provided with a plurality of touch panels, it is possible to provide operation methods that are new until now, and compatible with two kinds of operations, including the contact operation which is performed by contacting a touch panel directly with a finger or the like, and the spatial operation which is performed without contacting the touch panel. It includes a touch panel (1) having a detection unit (1A) that detects an input instruction in a first sensitivity range; a touch panel (2) having a detection unit (2A) that detects an input instruction in a second sensitivity range; a first operation determination unit (3A) and a second operation determination unit (3B) that receive detection data from the touch panel (1) and the touch panel (2) to convert the detection data into corresponding operational contents; and a space/contact determination unit (3D) that decides which of a spatial operation and a contact operation the first operation determination unit (3A) and the second operation determination unit (3B) determine as an operation to be determined, when the first operation determination unit (3A) and the second operation determination unit (3B) determine the operation.

## Description

### Technical Field

The present invention especially relates to an input control apparatus that includes a plurality of touch panels.

### Background Art

In recent years, for various electronic devices such as mobile phones, portable information terminals and portable music players, various efforts are made to develop input devices for performing input instructions. In particular, an article, which includes a touch panel on which input instructions are performed by performing operations of touching any positions of an operational surface, is widely used as an input device of electronic equipments recently. Typically, a user performs a touch or a tracing operation with a finger or a stylus on the touch panel, to take desired actions such as selecting/inputting characters or scrolling a screen of the portable terminal in which the touch panel is mounted.

Besides, in recent years, devices are developing which improves the operability of the portable terminal in which a touch panel is used by detecting a plurality of points on the touch panel.

In Patent Literature 1, a touch panel which detects a plurality of points is disclosed, and Fig. 13 is a diagram that shows the outline of the touch panel of Patent Literature 1.

### Citation List

### Patent Literature

Patent Literature 1: JP-T-2007-533044

### Summary of the Invention

### Technical Problem

However, in the conventional example in Patent Literature 1, limited operations like gesture operations such as flicks or pinches, besides touch or tracing operations, can be only recognized. Therefore, in order to perform complicated operations and use installed functions, it cannot necessarily be said that the operability is better than that of portable terminals which includes navigation keys or software keys. For example, when the panel is touched in order to perform a drag operation, it is possible that it is mistakenly recognized as a touch operation.

The present invention has been made in order to solve these conventional problems, and provides two kinds of operations, in a portable terminal which is provided with a plurality of touch panels, including a contact operation which is performed by contacting the touch panel directly with a finger or the like, and a spatial operation which is performed without contacting the touch panel. Thus, an input control apparatus is provided to realize operating methods which are new until now.

### Solution to Problem

An input control apparatus according to an aspect of the invention includes: a first input unit that is configured to detect an input instruction in a first sensitivity range; a second input unit that is configured to detect an input instruction in a second sensitivity range; a first operation determination unit that is configured to receive detection data from the first input unit and to convert the detection data into a corresponding operational content; a second operation determination unit that is configured to receive detection data from the second input unit and to convert the detection data into a corresponding operational content; a space/contact determination unit that is configured to decide which of a spatial operation and a contact operation the first operation determination unit and the second operation determination unit determine as an operation to be determined, when the first operation determination unit and the second operation determination unit determine the operation; a management unit that is configured to manage information which indicates a type and a state of an application; and a data combining unit that is configured to combine and output operation data from the first operation determination unit and the second operation determination unit, as operational information of the application managed by the management unit.

By the above configuration, in a portable terminal that is provided with a plurality of touch panels, it is possible to provide operation methods that are new until now, and compatible with two kinds of operations, including the contact operation which is performed by contacting a touch panel directly with a finger or the like, and the spatial operation which is performed without contacting the touch panel.

### Advantageous Effects of the Invention

According to the invention, new operational methods can be provided by realizing two kinds of operations in the portable terminal that is provided with the plurality of touch panels, the methods including the contact operation which is performed by contacting a touch panel directly with a finger or the like, and the spatial operation which is performed without contacting the touch panel.

### Brief Description of the Drawings

Fig. 1 is a block diagram which shows a configuration of an input control apparatus in a first embodiment of the invention.
Fig. 2 is a schematic diagram which shows sensitivity ranges of a sensitivity control unit 1B and a sensitivity control unit 2B of the input control apparatus in the first embodiment of the invention.
Fig. 3 is a flowchart which explains operational procedures of a touch panel 1 and a touch panel 2 of the input control apparatus in the first embodiment of the invention.
Fig. 4 is a flowchart which explains operational procedures of a management unit 3E and various applications 4 in an application control unit 3 of the input control apparatus in the first embodiment of the invention.
Fig. 5 is a flowchart which explains operational procedures of the application control unit 3 of the input control apparatus in the first embodiment of the invention.
Fig. 6 is a diagram which shows a transition of a display screen when the screen is scrolled by a spatial operation in an input control apparatus in a fourth embodiment of the invention.
Fig. 7 is a diagram which shows a transition of a display screen when a selected folder is dragged by a contact operation in the input control apparatus in the fourth embodiment of the invention.
Fig. 8 is a diagram which shows a transition of a display screen when an icon is selected by a spatial operation in an input control apparatus in a fifth embodiment of the invention.
Fig. 9 is a diagram which shows a transition of a display screen when a Web LINK is selected by a spatial operation in the input control apparatus in the fifth embodiment of the invention.
Fig. 10 is a diagram which shows a transition of a display screen when the display screen is enlarged by a spatial operation in an input control apparatus in a sixth embodiment of the invention.
Fig. 11 is a diagram which shows a transition of the display screen when the display screen is reduced by a spatial operation in the input control apparatus in the sixth embodiment of the invention.
Fig. 12 is a diagram which shows a transition of a display screen when a plurality of folders or images are selected by a spatial operation in an input control apparatus in a seventh embodiment of the invention.

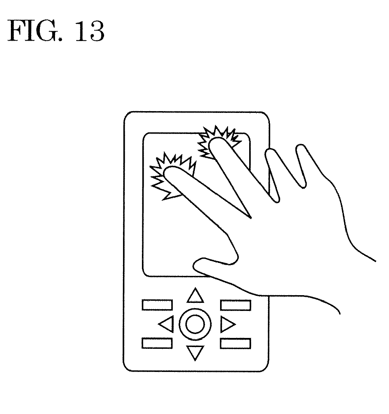

Fig. 13 is a diagram in which a conventional terminal provided with a touch panel is operated.

### Modes for Carrying out the Invention

Next, embodiments of the invention are described with reference to the drawings.

### (Embodiment 1)

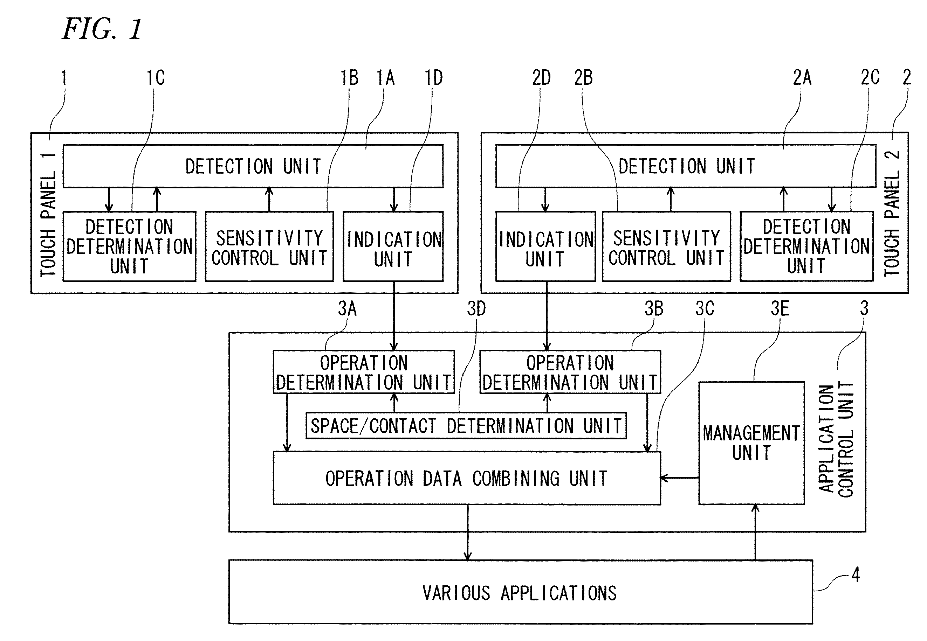

Fig. 1 is a block diagram which shows a configuration of an input control apparatus in a first embodiment of the invention. In Fig. 1, only those components that are related to the invention are illustrated, and illustrations of other elements in the terminal in which the invention is applied are omitted.

The input control apparatus includes a touch panel 1, a touch panel 2, an application control unit 3, and various applications 4.

The touch panel 1 is a capacitive touch panel which detects an operational position by catching a change of the surface charge of the panel surface, and includes a detection unit 1A, a sensitivity control unit 1B, a detection determination unit 1C, and an indication unit 1D.

The detection unit 1A detects operational contents which are from an input instructing part (for example, a user's finger, a stylus, or the like) which is not shown in the figure.

The sensitivity control unit 1B has a function of setting the detection sensitivity of the touch panel 1 by an adjustment value, in which a value for adjustment is set beforehand.

The detection determination unit 1C prepares detection data such as position information from the detected operation.

The indication unit 1D indicates the detection data prepared by the detection determination unit 1C to the application control unit 3.

As well as the touch panel 1, the touch panel 2 is a capacitive touch panel, and includes a detection unit 2A, a sensitivity control unit 2B, a detection determination unit 2C, and an indication unit 2D.

The detection unit 2A detects operational contents which are from an input instructing part (for example, a user's finger, a stylus, or the like) which is not shown in the figure.

The sensitivity control unit 2B has a function of setting the detection sensitivity of the touch panel 2 by an adjustment value, in which a value for adjustment is set beforehand. Here, the detection sensitivity of the sensitivity control unit 2B should be adjusted to be different from that of the sensitivity control unit 1B.

The detection determination unit 2C prepares detection data such as position information from the detected operation.

The indication unit 2D indicates the detection data prepared by the detection determination unit 2C to the application control unit 3.

The application control unit 3 includes an operation determination unit 3A, an operation determination unit 3B, an operation data combining unit 3C, a space/contact determination unit 3D, and a management unit 3E.

In response to the detection data from the touch panel 1 and the touch panel 2, the operation determination units 3A and 3B determine the detection data and convert them to operations of applications.

The operation data combining unit 3C combines the operation data which are from the operation determination unit 3A and the operation determination unit 3B.

The space/contact determination unit 3D holds setting information, which are used to determine whether the detection data correspond to contact operations or spatial operations which are described later, when the operation determination units 3A and 3B determine and convert the detection data to the operations of the applications in response to the detection data from the touch panel 1 and the touch panel 2.

The management unit 3E supervises the whole of the application control unit 3, and acquires and holds information such as the types or the states of the various applications 4.

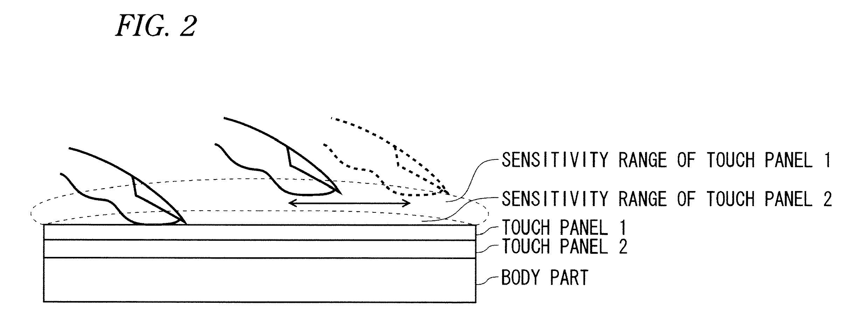

Fig. 2 is a diagram which shows typical sensitivity ranges of the sensitivity control unit 1B and the sensitivity control unit 2B of the input control apparatus in the first embodiment of the invention.

As shown in the figure, the touch panel 1 is arranged on the touch panel 2, and the touch panel 2 is arranged on a terminal body part.

Here, the sensitivity control unit 1B sets that the sensitivity of the touch panel 1 is higher than the sensitivity of the touch panel 2. On the other hand, the sensitivity control unit 2B sets that the sensitivity of the touch panel 2 is lower than the sensitivity of the touch panel 1.

Therefore, the input control apparatus in the first embodiment of the invention can distinguish an operation which the input instructing part performs by contacting the touch panel 1 (hereinafter briefly referred to as a contact operation) from an operation that the input instructing part performs without contacting the touch panel 1 (hereinafter briefly referred to as a spatial operation), and thus can detect both of the operations.

Further, the input control apparatus in the first embodiment of the invention not only can distinguish contact operations from spatial operations, but also can distinguish spatial operations in the sensitivity range of the touch panel 1 from spatial operations in the sensitivity range of the touch panel 2.

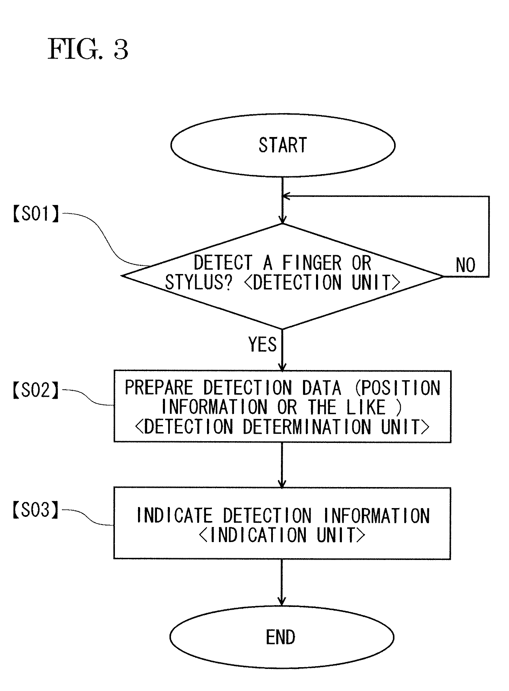

Fig. 3 is a flowchart which explains operational procedures of the touch panel 1 and the touch panel 2 (flows of the touch panels 1 and 2) of the input control apparatus in the first embodiment of the invention. Here, the sensitivity control unit 1B and the sensitivity control unit 2B are set so that the touch panel 1 detects spatial operations and the touch panel 2 detects contact operations. Further, in the following description, the space/contact determination unit 3D is set so that the operation determination unit 3A determines spatial operations and the operation determination unit 3B determines contact operations.

First, the detection unit 1A (or the detection unit 2A) determines whether there is an input made by the input instructing part (Step S01).

Next, when the detection unit 1A (or the detection unit 2A) determines that there is an input made by the input instructing part (Step S01, Yes), the detection determination unit 1C (or the detection determination unit 2C) calculates position information from a change of the capacitance due to the input instruction, and prepares detection data corresponding to the operation (Step S02).

On the other hand, when the detection unit 1A (or the detection unit 2A) determines that there is not an input made by the input instructing part (Step S01, No), the process of Step S01 is repeatedly performed.

Next, the indication unit 1D (or the indication unit 2D) inputs the detection data to the operation determination unit 3A (or the operation determination unit 3B) of the application control unit 3, respectively (Step S03).

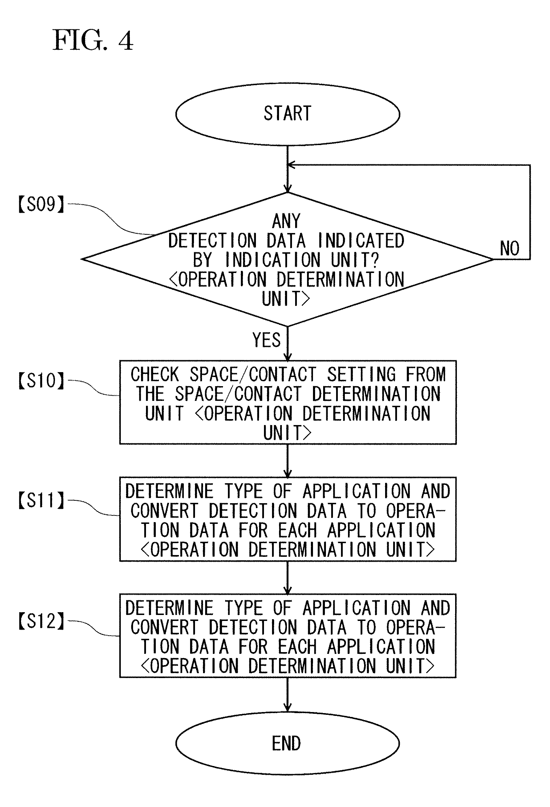

Fig. 4 is a flowchart which explains operational procedures of the management unit 3E and the various applications 4 (flow of the management unit) in the application control unit of the input control apparatus in the first embodiment of the invention.

The management unit 3E checks starts of the various applications 4 (Step S04).

Next, when the management unit 3E identifies a start of an application 4 (Step S04, YES), the management unit 3E acquires information such as the type or the state of the application 4 (Step S05).

On the other hand, when the management unit 3E determines that there is not a start of the various applications (Step S04, NO), the process of Step S04 is repeatedly performed.

Next, the management unit 3E determines whether it is necessary to update the application information which the management unit 3E itself holds based on the change of the state of the application 4 or the like (Step S06).

When the management unit 3E determines that it is necessary to update the application information (Step S06, YES), the management unit 3E updates the application information which the management unit 3E itself holds to the latest information (Step S07).

On the other hand, when the management unit 3E determines that it is not necessary to update the application information (Step S06, NO), the process of Step S06 is repeatedly performed.

The application information which the management unit 3E holds are shared by those parts that are included in the application control unit, that is, in the operation determination units 3A and 3B and the data combining unit 3C.

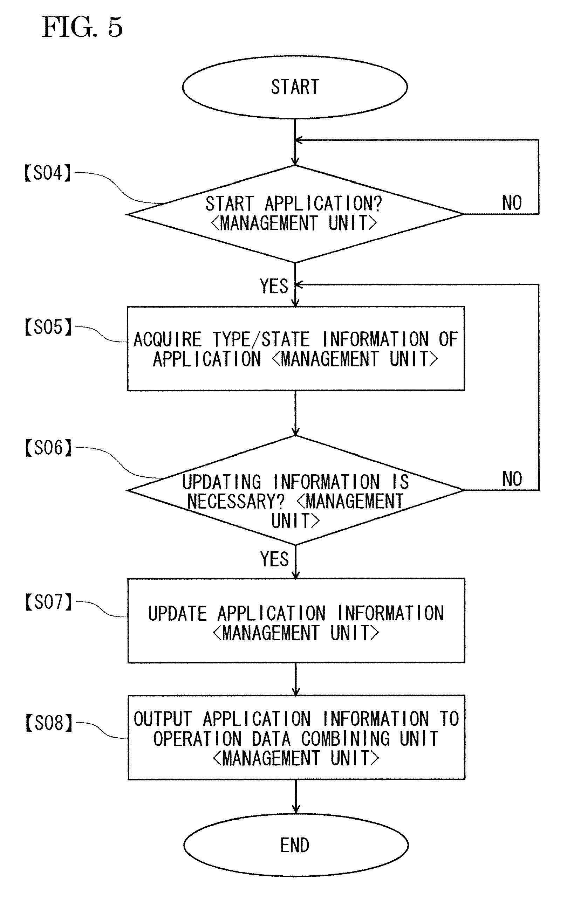

Fig. 5 is a flowchart which explains operational procedures of the application control unit 3 (whole flow of the application control unit) of the input control apparatus in the first embodiment of the invention.

First, the operation determination unit 3A (or the operation determination unit 3B) determines whether there are any detection data indicated by the indication unit 1D (or the indication unit 2D) (Step S09).

Next, when the operation determination unit 3A (or the operation determination unit 3B) determines that there are detection data indicated by the indication unit 1D (or the indication unit 2D) (Step S09, Yes), the operation determination unit 3A (or the operation determination unit 3B) converts the detection data to operation data corresponding to either of the spatial operation and the contact operation for each application based on the setting information from the space/contact determination unit 3D (Steps S10 and S11).

On the other hand, when the operation determination unit 3A (or the operation determination unit 3B) determines that there are not detection data indicated by the indication unit 1D (or the indication unit 2D) (Step S09, No), the process of Step S09 is repeatedly performed.

Next, when operation data which are converted by both the operation determination unit 3A and the operation determination unit 3B into operations for each application are detected at the same time, the operation data combining unit 3C selects the detection data based on the contact operation since detections are performed by both touch panels in case of a contact operation due to the structure of touch panels. When either of the two operation data is detected, the detected operation data is selected (Step S12).

Thus, according to the first embodiment, in a portable terminal provided with a plurality of touch panels, different operations on/over the same point can be distinguished by changing the detection sensitivity of the touch panels. In other words, a spatial operation can be distinguished from a contact operation. Accordingly, new operations can be provided. Moreover, it can be prevented that contact operations which are similar to each other are recognized mistakenly until now.

### (Embodiment 2)

A second embodiment differs from the first embodiment in that the touch panel 1 and the touch panel 2 of the input control apparatus shown in Fig. 1 are capacitive and resistive film touch panels, respectively.

The actions of the input control apparatus of the second embodiment configured as above, particularly those that differ from those of the first embodiment, are explained below.

The touch panel 2 is a resistive film touch panel which detects the position of an operation by catching a change of the pressure applied to the surface of the touch panel, and detects operational contents of an input instructing part which is not illustrated, for example, such as a stylus besides a finger of the user. However, the characteristic of the resistive film touch panel differs from that of the capacitive touch panels of the first embodiment in that it is assumed that the space/contact determination unit 3D sets that only contact operations are detected.

The input control apparatus thus configured in a portable terminal which is provided with a plurality of touch panels as well as the first embodiment makes it possible to perform different operations, or spatial operations and contact operations. Meanwhile, the input control apparatus enables a stylus or the like to be applied as an input instructing part by changing the touch panel 2 into a resistive film touch panel.

### (Embodiment 3)

A third embodiment differs from the first embodiment in that the touch panel 1 and the touch panel 2 of the input control apparatus shown in Fig. 1 are optical and resistive film touch panels, respectively.

The actions of the input control apparatus of the third embodiment configured as above that differ from those of the first embodiment are especially explained below.

The touch panel 1 (and touch panel 2) is an optical touch panel which detects the position of an operation by catching the position between a transmitting part such as an infrared ray unit arranged near the panel surface and a receiving part (a camera or the like) that is blocked with a finger or the like, and detects operational contents of an input instructing part which is not illustrated, for example, such as a stylus besides a finger of the user.

The input control apparatus thus configured in a portable terminal which is provided with a plurality of touch panels as well as the first embodiment provides new operations. In other words, the input control apparatus makes it possible to distinguish different operations on/over the same point, or spatial operations and contact operations. Meanwhile, the input control apparatus enables a stylus or the like to be applied as an input instructing part by changing the touch panel 1 (and 2) into an optical touch panel.

### (Embodiment 4)

A fourth embodiment differs from the first embodiment in that operations of the input instructing part (for example, a finger or the like) which is not illustrated are flick operations, and that it is assumed that the application 4 supports flick operations. Here, a flick operation refers to an operation of blowing or rubbing a panel surface lightly with a finger, and which makes an image list or a Web screen mainly to be scrolled towards the direction in which the finger blows.

The actions of the input control apparatus of the fourth embodiment configured as above, particularly those actions that are related to flick operations, are explained below using Fig. 5.

First, the operation determination unit 3A (or the operation determination unit 3B) determines whether there are any detection data indicated by the indication unit 1D (or the indication unit 2D) (Step S9).

Next, when the operation determination unit 3A (or the operation determination unit 3B) determines that there are detection data indicated by the indication unit 1D (or the indication unit 2D) (Step S9, Yes), it is checked that the operation determination unit 3A (or the operation determination unit 3B) converts the detection data to the operation data corresponding to either the spatial operation or the contact operation based on the setting information from the space/contact determination unit 3D (Step S10).

Moreover, the type of the control application is checked based on the application information from the management unit 3E, and the detection data are converted to the operation data corresponding to either the spatial operation or the contact operation for each application (Step S11).

In this case, in Step S11, the flick operation is converted into operation data which make a screen such as a Web screen to be scrolled. However, when the application 4 does not support flick operations, or a flick operation is not received, the flick operation becomes something which is not contained in the selection list of operations, and an invalid or different operation is selected.

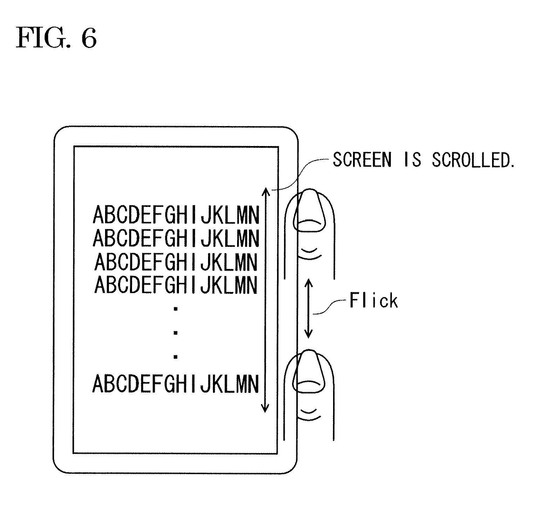

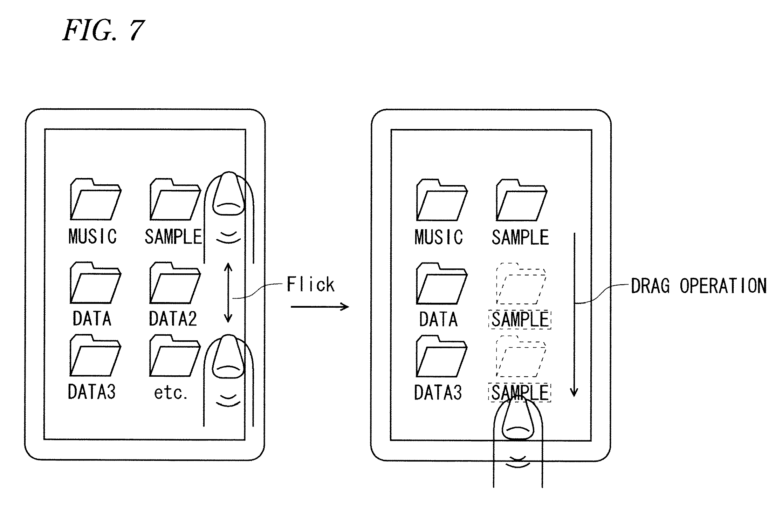

The input control apparatus thus configured in a portable terminal which is provided with a plurality of touch panels as well as the first embodiment provides new operations. In other words, the input control apparatus makes it possible to distinguish different operations on/over the same point, or spatial operations and contact operations. Meanwhile, a flick operation for scrolling a Web screen or the like when reading the screen can be prevented from being mistakenly recognized as a touch operation for selecting. These situations are illustrated in Figs. 6 and 7.

Fig. 6 illustrates that a Web screen is scrolled by a flick operation.

On the other hand, Fig. 7 illustrates that when a flick operation is to be performed in a folder list screen, the folder which is displayed as "SAMPLE" is touched and dragged.

Thus, when a flick operation is to be performed in this way, if there is a LINK of a selectable folder, a Web or the like near the flick point, touch operations and drag operations may be mistakenly recognized.

### (Embodiment 5)

A fifth embodiment differs from the first embodiment in that operations of the input instructing part (for example, a finger or the like) which is not illustrated are stay operations that the input instructing part stops in a place for a period of time, and that it is assumed that the applications 4 support stay operations.

The actions of the input control apparatus of the fifth embodiment configured as above, particularly those actions that are related to stay operations, are explained below using Fig. 5.

First, the operation determination unit 3A determines whether there are any detection data indicated by the indication unit 1D (Step S9).

Next, when the operation determination unit 3A determines that there are detection data indicated by the indication unit 1D (Step S9, Yes), it is checked that the operation determination unit 3A converts the detection data to the operation data corresponding to the spatial operation based on the setting information from the space/contact determination unit 3D (Step S10).

Moreover, the type of the control application is checked based on the application information from the management unit 3E, the detection data are converted to the operation data corresponding to the spatial operation for each application (Step S11).

In this case, in Step S11, the operation of staying in a place for a period of time is converted into operation data which make an icon, which is at a point to be touched, to be highlighted (reversed) or enlarged. However, when the application 4 does not support operations of staying in a place for a period of time, or a stay operation is not received, the stay operation becomes something which is not contained in the selection list of operations, and an invalid or different operation is selected.

The operation determination unit 3B determines whether there are any detection data indicated by the indication unit 2D (Step S9).

Next, when the operation determination unit 3B determines that there are detection data indicated by the indication unit 2D (Step S9, Yes), it is checked that the operation determination unit 3B converts the detection data to the operation data corresponding to the contact operation based on the setting information from the space/contact determination unit 3D (Step S10).

Moreover, the type of the control application is checked based on the application information from the management unit 3E, and the detection data are converted to the operation data corresponding to the contact operation for each application (Step S11).

In this case, in Step S11, the contact operation near the above point is converted into operation data which make the preferably selected operation to be performed. However, when the application 4 does not support the above operations, or the above operation is not received, the above operation becomes something which is not contained in the selection list of operations, and an invalid or different operation is selected.

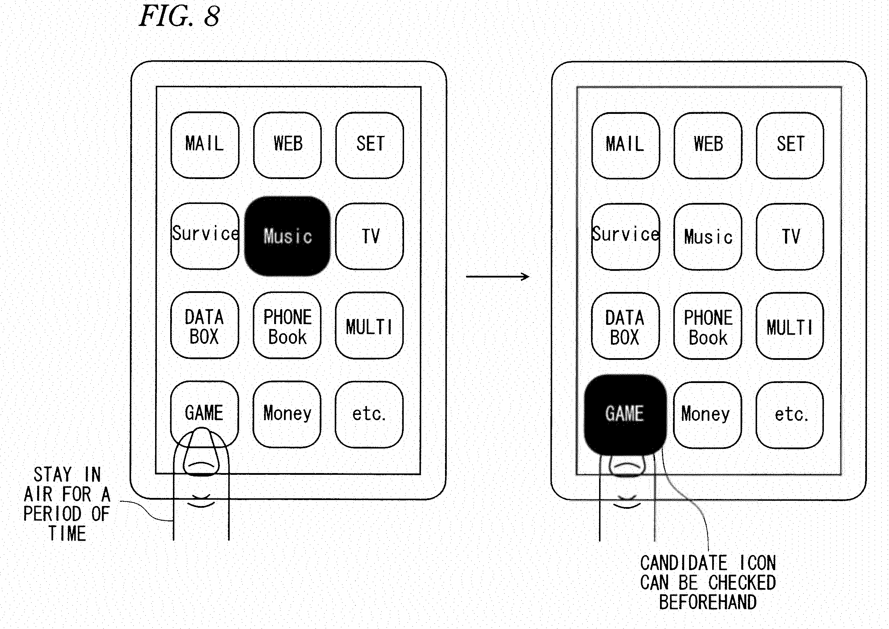

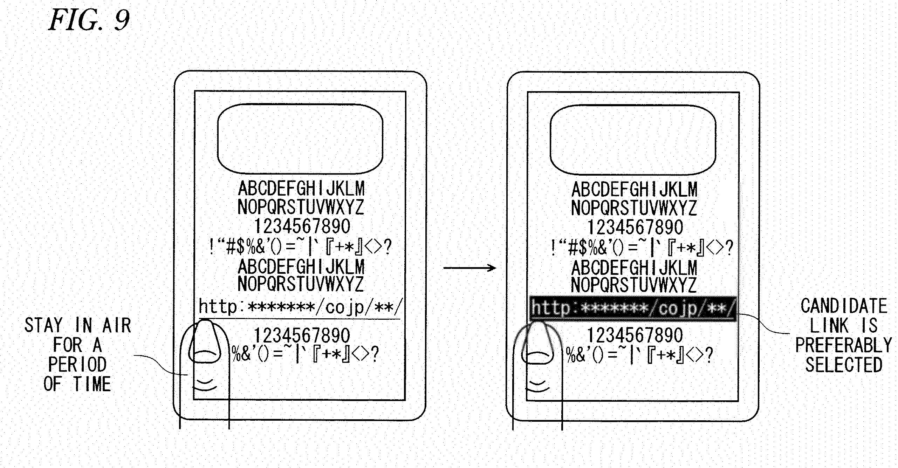

The input control apparatus thus configured in a portable terminal which is provided with a plurality of touch panels as well as the first embodiment provides new operations. In other words, the input control apparatus makes it possible to distinguish different operations on/over the same point, or spatial operations and contact operations. Meanwhile, since the point to be touched is known when a selection action or the like is taken on a touch panel, erroneous operations such as a touch on a point which is not intended to be touched can be prevented. These situations are illustrated in Figs. 8 and 9.

When there are multiple selectable objects such as web links and icons in a Web screen which is not enlarged, if a certain selection object to be selected by a touch operation is not fully enlarged, a selection objected not intended to be selected may be selected. In this case, if a finger stays at a place for a period of time, the point to which the finger points is enlarged or highlighted as shown in Fig. 8, and the object to be selected by a touch is checked beforehand. The object which is selected by being highlighted is preferably selected by a touch operation in such a state, compared with the surrounding selection objects as shown in Fig. 9.

### (Embodiment 6)

A sixth embodiment differs from the first embodiment in that operations of the input instructing part (for example, a finger or the like) which is not illustrated are upwards and downwards operations that make the input instructing part move upwards and downwards, and that it is assumed that the application 4 supports those upwards and downwards operations.

The actions of the input control apparatus of the sixth embodiment configured as above, particularly those actions that are related to upwards and downwards operations, are explained below using Fig. 5.

First, the operation determination unit 3A determines whether there are any detection data indicated by the indication unit 1D (Step S9).

Next, when the operation determination unit 3A determines that there are detection data indicated by the indication unit 1D (Step S9, Yes), it is checked that the operation determination unit 3A converts the detection data to the operation data corresponding to the spatial operation based on the setting information from the space/contact determination unit 3D (Step S10).

Moreover, the type of the control application is checked based on the application information from the management unit 3E, and the detection data are converted to the operation data corresponding to the spatial operations for each application (Step S11).

In this case, in Step S11, the upwards and downwards operations are converted into operation data which make the applications displayed on the touch panel to be enlarged or reduced. However, when the application 4 does not support the upwards and downwards operations, or the upwards and downwards operation are not received, the upwards and downwards operation becomes something which is not contained in the selection list of operations, and an invalid or different operation is selected.

Next, when the operation determination unit 3B determines that there are detection data indicated by the indication unit 2D (Step S9, Yes), it is checked that the operation determination unit 3A converts the detection data to the operation data corresponding to the contact operation based on the setting information from the space/contact determination unit 3D (Step S10).

Moreover, the type of the control application is checked based on the application information from the management unit 3E, the detection data are converted to the operation data corresponding to the contact operation for each application (Step S11).

In this case, in Step S11, the contact operation is converted into the operation data which make an operation of selecting an icon, which is a touch operation, to be performed. However, when the application 4 does not support the above operations, or the above operation is not received, the above operation becomes something which is not contained in the selection list of operations, and an invalid or different operation is selected.

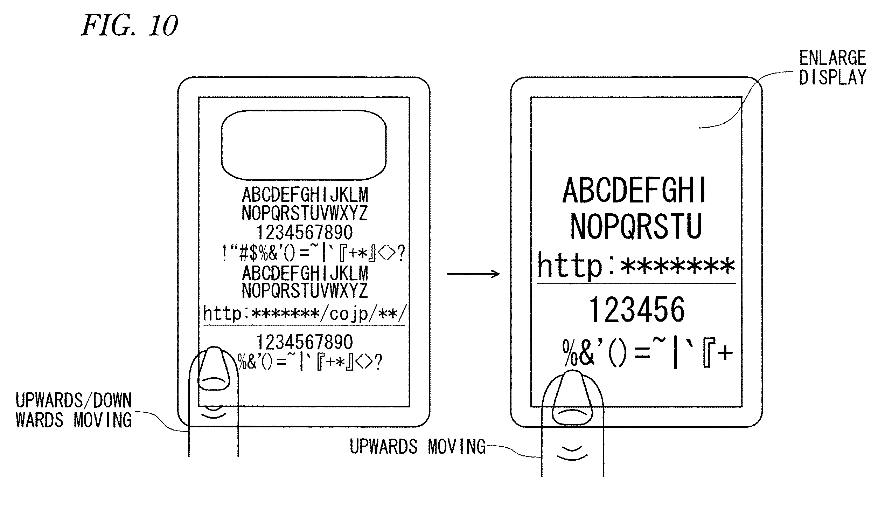

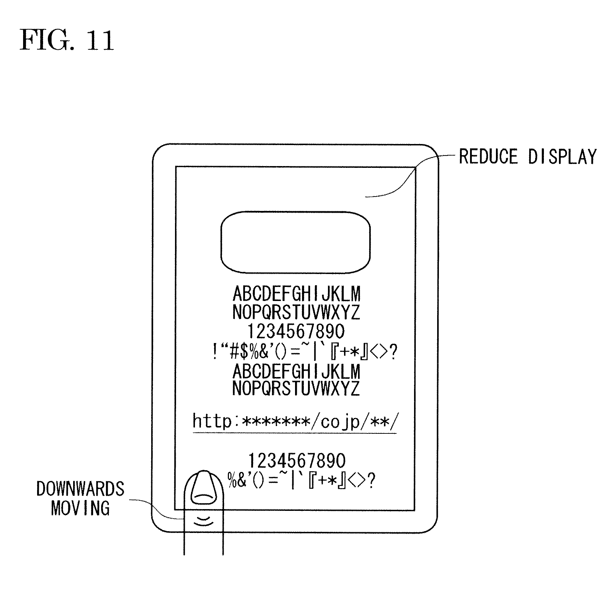

The input control apparatus thus configured in a portable terminal which is provided with a plurality of touch panels like the first embodiment provides new operations. In other words, the input control apparatus makes it possible to distinguish different operations on/over the same point, or spatial operations and contact operations. Meanwhile, enlarging/reducing operations by the upwards/downwards moving of a finger or the like can be prevented from being mistakenly recognized as a touch operation on the same point. These situations are illustrated in Figs. 10 and 11.

When a screen such as a Web and a map application is to be enlarged arbitrarily, as shown in Fig. 10, moving a finger or the like upwards in a part to be enlarged is performed. Conversely, when the screen is to be reduced arbitrarily, as shown in Fig. 11, moving a finger or the like downwards is performed.

### (Embodiment 7)

A seventh embodiment differs from the first embodiment in that operations of the input instructing part (for example, a finger or the like) which is not illustrated are surrounding operations, and that it is assumed that the application 4 supports the surrounding operations.

The actions of the input control apparatus of the sixth embodiment configured as above, particularly those actions that are related to surrounding operations, are explained below using Fig. 5.

First, the operation determination unit 3A determines whether there are any detection data indicated by the indication unit 1D (Step S9).

Next, when the operation determination unit 3A determines that there are detection data indicated by the indication unit 1D (Step S9, Yes), it is checked that the operation determination unit 3A converts the detection data to the operation data corresponding to the spatial operation based on the setting information from the space/contact determination unit 3D (Step S10).

Moreover, the type of the control application is checked based on the application information from the management unit 3E, and the detection data are converted to the operation data corresponding to the spatial operations for each application (Step S11).

In this case, in Step S11, the surrounding operation is converted into operation data which make an operation of selecting a plurality of objects in the selected area such as files and folders to be performed. However, when the application 4 does not support the surrounding operations, or the surrounding operations are not received, the surrounding operation becomes something which is not contained in the selection list of operations, and an invalid or different operation is selected.

Next, when the operation determination unit 3B determines that there are detection data indicated by the indication unit 2D (Step S9, Yes), it is checked that the operation determination unit 3A converts the detection data to the operation data corresponding to the contact operation based on the setting information from the space/contact determination unit 3D (Step S10).

Moreover, the type of the control application is checked based on the application information from the management unit 3E, the detection data are converted to the operation data corresponding to the contact operation for each application (Step S11).

In this case, in Step S11, the contact operation is converted into the operation data which make an operation of selecting an icon, which is a touch operation, or an operation of dragging a file, to be performed. However, when the application 4 does not support the above operations, or the above operation is not received, the above operation becomes something which is not contained in the selection list of operations, and an invalid or different operation is selected.

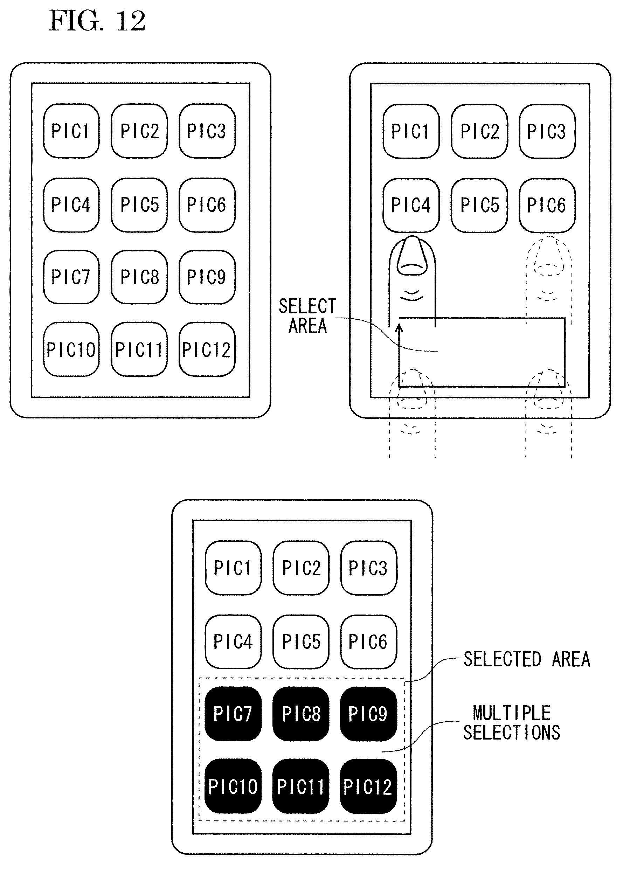

The input control apparatus thus configured in a portable terminal which is provided with a plurality of touch panels as well as the first embodiment provides new operations. In other words, the input control apparatus makes it possible to distinguish different operations on/over the same point, or spatial operations and contact operations. Meanwhile, operations of multiple selection in a selected area by the surrounding operation of a finger or the like can be prevented from being mistakenly recognized as a drag or touch operation on the same point. These situations are illustrated in Fig. 12.

In a folder or image list screen, if a finger is operated so that the folders or images selected as shown in Fig. 12 are surrounded, the folders or images in the surrounded area are multiply selected.

Although the invention has been described in detail and with reference to particular embodiments, it is apparent for those skilled in the art to apply various change and modification without departing from the spirit and the scope of the invention.
This application is based upon Japanese Patent Application No. 2009-169885 filed on July 21, 2009, the contents of which are incorporated herein by reference.

### Industrial Applicability

According to the invention, new operating methods can be provided by realizing two operating method, that is, an operation performed by contacting a touch panel directly with a finger or the like, and an operation performed without contacting the touch panel. Therefore, the invention is suitable for electronic devices which receive complicated input instructions in a limited space, such as mobile phones and PDAs.

### Reference Signs List

- 1, 2:: touch panel
- 1A, 2A:: detection unit
- 1B, 2B:: sensitivity control unit
- 1C, 2C:: detection determination unit
- 1D, 2D:: indication unit
- 3:: application control unit
- 3A, 3B:: operation determination unit
- 3C:: operation data combining unit
- 3D:: space/contact determination unit
- 3E:: management unit
- 4:: various applications

## Claims

1. An input control apparatus, comprising:
a first input unit that is configured to detect an input instruction in a first sensitivity range;
a second input unit that is configured to detect an input instruction in a second sensitivity range;
a first operation determination unit that is configured to receive detection data from the first input unit and to convert the detection data into a corresponding operational content;
a second operation determination unit that is configured to receive detection data from the second input unit and to convert the detection data into a corresponding operational content;
a space/contact determination unit that is configured to decide which of a spatial operation and a contact operation the first operation determination unit and the second operation determination unit determine as an operation to be determined, when the first operation determination unit and the second operation determination unit determine the operation;
a management unit that is configured to manage information which indicates a type and a state of an application; and
a data combining unit that is configured to combine and output operation data from the first operation determination unit and the second operation determination unit, as operational information of the application managed by the management unit.

2. The input control apparatus according to claim 1, wherein
the first input unit is a capacitive touch panel and the second input unit is a resistance film touch panel.

3. The input control apparatus according to claim 1, wherein
the first input unit is a capacitive touch panel and the second input unit is an optical touch panel.

4. The input control apparatus according to claim 1, wherein
the first input unit is a capacitive touch panel and the second input unit is also a capacitive touch panel.

5. The input control apparatus according to claim 1, wherein
the first operation determination unit is configured to determine the operation as a scrolling operation when the first input unit detects a predetermined operation in the first sensitivity range, and
the second operation determination unit is configured to determine the operation as a drag operation and a touch operation when the second input unit detects the predetermined operation in the second sensitivity range.

6. The input control apparatus according to claim 1, wherein
the first operation determination unit is configured to determine the operation as an operation of selecting an item of the application when the first input unit detects an operation of staying for a period of time as an input instruction in the first sensitivity range, and
the second operation determination unit is configured to determine the operation as a touch operation when the second input unit detects the operation of staying for the period of time as an input instruction in the second sensitivity range.

7. The input control apparatus according to claim 1, wherein
the first operation determination unit is configured to determine the operation as an enlarging or reducing operation of the application when the first input unit detects an upwards or downwards moving operation in the first sensitivity range as an input instruction, and
the second operation determination unit is configured to determine the operation as a touch operation or a release operation when the second input unit detects an upwards or downwards moving operation in the second sensitivity range as an input instruction.

8. The input control apparatus according to claim 1, wherein
the first operation determination unit is configured to determine the operation as an area selecting operation of the application when the first input unit detects a surrounding operation in the first sensitivity range, and
the second operation determination unit is configured to determine the operation as a drag operation when the second input unit detects a surrounding operation in the second sensitivity range.

## Amended claims

### Amended claims under Art. 19.1 PCT

**1.** *(Amended)*: An input control apparatus, comprising:
a first input unit that is configured to detect an input instruction in a first sensitivity range;
a second input unit that is configured to detect an input instruction in a second sensitivity range;
a first operation determination unit that is configured to receive detection data from the first input unit and to convert the detection data into a corresponding operational content;
a second operation determination unit that is configured to receive detection data from the second input unit and to convert the detection data into a corresponding operational content;
a space/contact determination unit that is configured to decide which of a spatial operation and a contact operation the first operation determination unit and the second operation determination unit determine as an operation to be determined, when the first operation determination unit and the second operation determination unit determine the operation;
a management unit that is configured to manage information which indicates a type and a state of an application; and
a data combining unit that is configured to combine and output operation data from the first operation determination unit and the second operation determination unit, as operational information of the application managed by the management unit, wherein
the first operation determination unit is configured to determine the operation as an area selecting operation of the application when the first input unit detects a surrounding operation in the first sensitivity range, and
the second operation determination unit is configured to determine the operation as a drag operation when the second input unit detects a surrounding operation in the second sensitivity range.

**2.** The input control apparatus according to claim 1, wherein
the first input unit is a capacitive touch panel and the second input unit is a resistance film touch panel.

**3.** The input control apparatus according to claim 1, wherein
the first input unit is a capacitive touch panel and the second input unit is an optical touch panel.

**4.** The input control apparatus according to claim 1, wherein
the first input unit is a capacitive touch panel and the second input unit is also a capacitive touch panel.

**5.** *(Deleted)*

**6.** *(Deleted)*

**7.** *(Deleted)*

**8.** *(Deleted)*
